# FASCICULE DE BREVET EUROPEEN

(11) **EP 1 867 190 B1**
(45) Date de publication et mention de la délivrance du brevet: **19.08.2009**
(21) Numéro de dépôt: 06726312.9
(22) Date de dépôt: 06.04.2006
(51) Int. Cl.: H04W 12/02, H04L 29/06

(54) **GESTION D'ACCES A DES CONTENUS MULTIMEDIAS**
VERWALTUNG DES ZUGANGS ZU MULTIMEDIA-INHALTEN
MANAGING ACCESS TO MULTIMEDIA CONTENTS

(30) Priorité: 07.04.2005 FR 0503469; 10.10.2005 FR 0510314
(43) Date de publication de la demande: 19.12.2007
(73) Titulaire: FRANCE TELECOM, 75015 Paris (FR)
(72) Inventeur: FERRAZZINI, Axel, F-75010 Paris (FR); ANZA, Diego, F-75015 Paris (FR); CHAUVAUD, Pascal, F-92130 Issy Les Moulineaux (FR)
(74) Mandataire: Desormiere, Pierre-Louis
(86) Numéro de dépôt international: PCT/FR2006/050306
(87) Numéro de publication internationale: WO 2006/106270

(56) Documents cités:
- US-A1- 2001 052 077
- US-A1- 2004 157 584

## Description

### Domaine de l'invention

La présente invention concerne le domaine de la transmission de contenus numériques ou multimédias vers des terminaux mobiles et en particulier les contenus de type programmes audiovisuels chiffrés.

### Art antérieur

La plupart des solutions actuelles due diffusion de programmes audiovisuels chiffrés (ou cryptés) par le câble ou le satellite présente des failles de sécurité importantes exploitées par de nombreux fraudeurs. On assiste même à l'organisation de réseaux de fraudeurs distribuant les codes ainsi que les logiciels nécessaires à la génération des codes indispensables au déchiffrement des programmes diffusés (certains ayant une forte valeur ajoutée tels que des films ou des matches de football).

Ceci est en partie dû à l'absence dans les systèmes existants d'une connexion bidirectionnelle et individuelle permanente des utilisateurs et donc à l'impossibilité de faire une vérification en temps réel des droits des utilisateurs à visionner les programmes chiffrés. Beaucoup d'abonnés souscrivent à des abonnements de base et se procurent les codes correspondants aux droits plus élevés et peuvent donc bénéficier de ces droits sans les avoir payés.

De plus, il n'existe aucun moyen actuellement de reprendre la lecture d'un contenu chiffré à l'endroit où il a été interrompu en raison d'une pause voulue par l'utilisateur ou involontaire. Par exemple, dans le contexte d'un récepteur situé dans un téléphone mobile, le visionnage peut être interrompu fréquemment pour téléphoner ou par une interruption de la couverture réseau. Cette limitation est très gênante pour les utilisateurs notamment dans un contexte mobile.

Le document US 2004/157584 décrit un procédé d'établissement et de gestion d'un modèle de confiance entre une carte SIM et un terminal mobile dans lequel la carte SIM reçoit, via un réseau de téléphonie mobile, des moyens d'authentification qui comprennent notamment une ou plusieurs clés de cryptographie qui sont stockées dans la carte SIM.

Le document US 2001/052077 décrit un système et un procédé dans lesquels des utilisateurs équipés de terminaux mobiles peuvent recevoir des contenus multimédias payants distribués à partir de serveurs, et ce de façon sécurisée sans risque de violation des droits d'utilisation.

### Objet et description succincte de l'invention

La présente invention vise à remédier aux inconvénients précités et à proposer une solution pour permettre aux utilisateurs de téléphone mobile de visionner des programmes audiovisuels chiffrés de manière plus sécurisée et dont il est possible de reprendre la réception à l'endroit où l'interruption s'est produite.

Ces buts sont atteints grâce à un procédé de gestion de transmission de contenus multimédias sur un terminal mobile équipé d'un module de sécurité, lesdits contenus multimédias étant transmis sous forme chiffrée à partir d'un serveur de diffusion et via un réseau de communication, ledit procédé comprenant les étapes suivantes:
a) envoi au terminal mobile de données de droits d'utilisation pour au moins un contenu multimédia,
b) stockage desdites données de droits d'utilisation dans le module de sécurité du terminal mobile,
c) génération d'une suite de clés de chiffrement/déchiffrement, la suite de clés de déchiffrement étant générée à partir des données de droits d'utilisation stockées dans le module de sécurité,
d) transmission du contenu multimédia au terminal mobile, ledit contenu étant chiffré successivement avec les clés de la suite de clés de chiffrement générée,
e) réception du contenu multimédia par le terminal mobile et déchiffrement du contenu multimédia à partir des clés de déchiffrement de la suite de clés de déchiffrement générée dans le module de sécurité du terminal mobile ;
**caractérisé en ce que** le serveur de diffusion chiffre chaque tramé du contenu multimédia avec une clé de chiffrement distincte de la suite de clés de chiffrement, le module de sécurité du terminal mobile générant une suite de clés de chiffrement similaire,
et en ce que lors d'une interruption de la transmission du contenu multimédia, ledit procédé comprend en outre une étape f) d'envoi par le terminal mobile au serveur de diffusion de données de référence de la clé de chiffrement utilisée au moment de l'interruption et une étape g) de reprise de la diffusion du contenu multimédia en fonction de ladite clé de chiffrement envoyée à l'étape f).

Ainsi, des contenus multimédias tels que des programmes audiovisuels peuvent être transmis sur des terminaux mobiles d'une façon sécurisée grâce au changement dynamique des clés de chiffrement/déchiffrement en parallèle dans le serveur de diffusion et dans le terminal mobile.

Dans l'étape c), chaque clé de chiffrement/déchiffremént peut être générée pendant une durée correspondant à l'intervalle de temps défini par chaque trame envoyée par le serveur de diffusion.

Ainsi, conformément au procédé de l'invention, l'utilisateur a la possibilité de reprendre la transmission de son programme à un endroit proche de l'interruption qu'il a lui-même initiée ou subie à cause d'éléments extérieurs.

Selon un autre aspect de l'invention, le procédé comprend en outre une étape h) de vérification de la validité des droits d'utilisation sur le terminal mobile, la vérification étant réalisée par interrogation des données de droits d'utilisation enregistrées dans le module de sécurité et par comparaison de celles-ci avec des données de droits d'utilisation stockées dans une base de données. En fonction du résultat de cette vérification, le fournisseur de service peut à tout moment (lorsque le téléphone est sous couverture réseau) vérifier la validité des droits, les modifier et interrompre le service si nécessaire.

Pour augmenter le niveau de sécurité des contenus multimédias transmis sur le réseau de communication, dans l'étape c), les clés de la suite de clés de déchiffrement peuvent être calculées itérativement à partir d'une clé de base et d'un code secret, ledit code secret étant préalablement défini et échangé entre le terminal mobile et le serveur de diffusion.

Dans le cas, par exemple, d'un téléphone mobile équipé d'une carte (U)SIM, l'invention propose un procédé pour chiffrer les programmes à l'aide d'une clé qui change dynamiquement dans le temps suivant une suite connue uniquement par la carte (U)SIM et par le fournisseur de service. Ces clés sont calculées de façon itérative à partir d'un droit obtenu par l'utilisateur avant le début de la transmission du programme et stocké dans la carte (U)SIM. La validité de ces droits peut être vérifiée à tout moment à condition que l'utilisateur soit sous couverture réseau. Le fournisseur de service peut à tout moment répudier ou non les droits ainsi contrôlés.

La procédure de déchiffrement peut être réinitialisée à un moment proche d'une interruption voulue ou non de l'utilisateur grâce à la communication au serveur d'une référence fournie par la carte (U)SIM. Le procédé comprend les étapes suivantes:
a) Stockage dans la carte (U)SIM des droits de l'utilisateur contenant les clés de base du chiffrement.
b) Génération d'une suite de clés utilisées pour chiffrer le programme avec une fréquence définie par le fournisseur de service. Cette génération se fait à partir d'une clé de base en parallèle dans la carte ou le terminal et dans le serveur du fournisseur de service chiffrant et transmettant le programme.
c) Une procédure pour communiquer une référence (par exemple le numéro de la clé ou la clé elle-même) fournie par la carte (U)SIM au fournisseur de service indiquant la position où le déchiffrement a été interrompu afin de reprendre la transmission du programme.

L'invention concerne également un module de sécurité destiné à être embarqué dans un terminal mobile, ledit terminal de communication étant utilisé pour recevoir des contenus multimédias transmis sous forme chiffrée par une suite de clés de chiffrement, ledit module, comprenant des moyens pour mémoriser des données de droits d'utilisation pour au moins un contenu multimédia et des moyens pour calculer et stocker une suite de clés de déchiffrement à partir des données de droits d'utilisation enregistrées, **caractérisé en ce que** chaque trame d'un contenu multimédia est chiffrée avec une clé de chiffrement distincte de la suite de clés de chiffrement et en ce que ledit module comprend des moyens pour générer une suite de clés de chiffrement similaire à la suite de clés de chiffrement utilisée pour chiffrer le contenu multimédia et des moyens pour envoyer des données de référence de la clé de chiffrement utilisée au moment d'une interruption de la transmission d'un contenu multimédia au terminal mobile.

L'invention concerne également un terminal mobile équipé d'un module de sécurité tel que décrit précédemment ainsi qu'un programme d'ordinateur destiné à être mis en oeuvre sur un tel terminal mobile, le programme comportant des instructions pour générer une suite de clés de chiffrement/déchiffrement, la suite de clés de déchiffrement étant générée à partir de données de droits d'utilisation reçues par le terminal mobile et pour déchiffrer, à partir des clés de déchiffrement de la suite de clés de déchiffrement générée, un contenu multimédia reçu par le terminal mobile, **caractérisé en ce que** chaque trame du contenu multimédia est chiffrée avec une clé de chiffrement distincte d'une suite de clés de chiffrement et en ce que ledit programme comporte des instructions pour générer une suite de clés de chiffrement similaire à la suite de clés de chiffrement utilisée pour chiffrer le contenu multimédia et des instructions pour envoyer des données de référence de la clé de chiffrement utilisée au moment d'une interruption de la transmission du contenu multimédia au terminal mobile.

L'invention concerne encore un serveur de diffusion comprenant des moyens pour transmettre via un réseau de communication des contenus multimédias sous forme chiffrée à un terminal mobile équipé d'un module de sécurité, ledit serveur comprenant des moyens pour transmettre au terminal mobile des données de droits d'utilisation sur les contenus multimédias transmis comprenant des données pour calculer une suite de clés de déchiffrement similaire à une suite de clés de chiffrement calculée par ledit serveur, **caractérisé en ce qu**'il comprend en outre des moyens pour chiffrer chaque trame d'un contenu multimédia avec une clé de chiffrement distincte de la suite de clés de chiffrement et des moyens pour, lors d'une interruption de diffusion d'un contenu multimédia, interroger le module de sécurité du terminal mobile sur la dernière clé de chiffrement utilisée au moment de l'interruption.

Ce serveur peut comprendre en outre une base de données pour stocker les données droits d'utilisation transmis au terminal mobile, des moyens pour interroger les données de droits d'utilisation enregistrées sur le module de sécurité du terminal mobile et pour les comparer avec les données de droits d'utilisation stockées dans la base de données.

Le serveur de diffusion peut être mis en oeuvre grâce à un programme d'ordinateur comportant des instructions pour générer une suite de clés de chiffrement/déchiffrement, des instructions pour transmettre à un terminal mobile des données de droits d'utilisation sur au moins un contenu multimédia comprenant des données pour calculer une suite de clés de déchiffrement similaire à la suite de clés de chiffrement calculée par le serveur et des instructions pour transmettre le contenu multimédia au terminal mobile, **caractérisé en ce qu**'il comporte en outre des instructions pour chiffrer chaque trame du contenu multimédia avec une clé de chiffrement distincte de la suite de clés de chiffrement générées et des instructions pour, lors d'une interruption de diffusion du contenu multimédia, interroger le module de sécurité du terminal mobile sur la dernière clé de chiffrement utilisée au moment de l'interruption.

Enfin, la présente invention a aussi pour objet un système de gestion de transmission de contenus multimédias comprenant un terminal mobile équipé d'un module de sécurité et un serveur de diffusion tels que définis précédemment.

### Brève description des dessins

Les caractéristiques et avantages de la présente invention ressortiront mieux de la description suivante, faite à titre indicatif et non limitatif, en regard des dessins annexés sur lesquels :
- La figure 1 est une vue schématique globale du système mis en oeuvre dans l'invention;
- La figure 2 illustre un exemple de la gestion des données dans une carte (U)SIM conformément à l'invention;
- La figure 3 illustre un exemple de transmission d'un programme audiovisuel chiffré;
- La figure 4 illustre un exemple de recouvrement de clef pour reprendre la réception des programmes conformément à l'invention;
- La figure 5 est un exemple de vérification de droits permettant au fournisseur de service, après vérifications, de répudier ou non les droits de l'utilisateur.

### Description détaillée des modes de réalisation de l'invention

La présente invention s'applique aux téléphones portables ou tout autre terminal mobile équipé d'un écran et d'un module de sécurité, capable de communiquer sur un réseau de téléphonie mobile classique et capable de recevoir des contenus multimédias tels que des flux audiovisuels numériques. Ces appareils sont de plus en plus de petits ordinateurs de poche qui, de façon connue, comprennent à leur échelle les ressources de base rencontrées dans les ordinateurs classiques. Plus précisément, ces téléphones comprennent notamment des moyens de traitement tel qu'un processeur permettant d'exécuter des programmes et des moyens de mémorisation pour le stockage des données. De façon bien connue, ce processeur peut être inclus dans une carte à puce de type SIM (pour "Subscriber Identity Module") ou USIM (pour "Universal Subscriber Identity Module", communément écrit (U)SIM) qui constitue en outre un coffre-fort inviolable offrant un niveau de sécurité équivalent ou supérieur à celui d'un terminal classique. C'est pourquoi, comme il sera expliqué en détail ci-dessous, la solution de la présente invention consiste à fournir des moyens pour utiliser le module de sécurité et sa connexion bidirectionnelle permanente avec le réseau de l'opérateur de façon à permettre au terminal de gérer de manière ergonomique les interruptions de service ainsi qu'au fournisseur de service (ex. Orange™) de disposer d'une procédure immédiate et sécuritaire pour l'initialisation, la modification, la vérification et la révocation des droits. Toutefois, certains terminaux mobiles fonctionnent sans support physique indépendant, par exemple sans carte à puce. Dans ce cas, le module de sécurité est implémenté directement avec les moyens de traitement et de mémorisation du terminal mobile, une partie des moyens de mémorisation du téléphone mobile étant réservée pour recevoir les données transmises au module de sécurité comme décrit plus loin en détail.

Dans le cadre de cette description détaillée nous nous limiterons aux cas de terminaux téléphoniques mobiles équipés d'une carte (U)SIM.

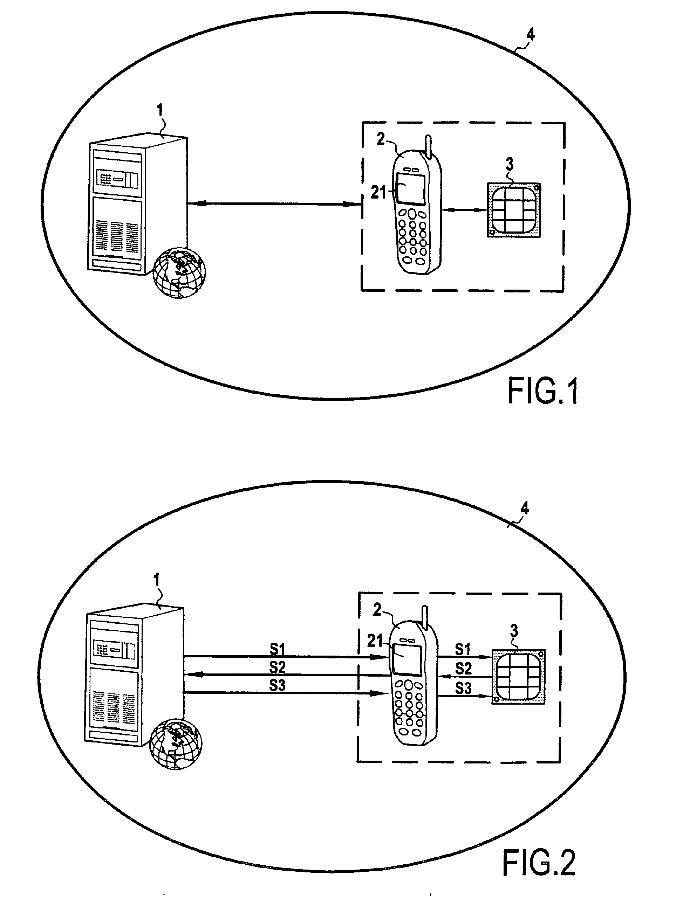

La figure 1 est un schéma simplifié montrant les relations entre les principaux éléments qui sont mis en oeuvre dans le système et le procédé de transmission de programme conformément à l'invention. Comme représenté sur la figure 1, le système comprend un serveur 1, un téléphone 2 comprenant un écran 21 et une carte d'abonné de type (U)SIM 3 amovible. Le système comprend en outre un réseau de téléphonie mobile 4 permettant la communication du serveur 1, du téléphone 2 et de la carte SIM 3. Le serveur 1 contrôle la transmission et la gestion de la sécurité des contenus (notamment le cryptage).

Le téléphone 2 et la carte d'abonné de type (U)SIM 3 communiquent de façon connue via une interface logicielle. Par exemple dans le cas du mobile, cette interface est standardisée par l'ETSI (Institut Européen des Normes de Télécommunication). Par conséquent, le serveur 1 peut avoir un accès, en lecture et en écriture, à la mémoire de la carte d'abonné de type (U)SIM 3 via le réseau de téléphonie mobile 4 et par l'intermédiaire du téléphone 2 dans lequel est placée la carte.

La figure 2 est un schéma montrant la communication entre le serveur 1, le téléphone 2 et la carte (U)SIM 3. Cette communication, rendue possible grâce au réseau de téléphonie mobile 4, permet l'identification et l'authentification du téléphone mobile et de la carte (U)SIM de l'utilisateur (étapes S1 et S2). Cette communication permet l'envoi et le stockage d'une manière sécurisée des droits d'utilisation acquis par l'utilisateur sur sa carte (U)SIM (étape S3). Ces droits contiennent classiquement des associations avec le programme dont font l'objet les droits, des clefs de déchiffrement, des éléments garantissant l'authenticité des droits etc. et ont été normalisés dans différents instituts (notamment l'Open Digital Rights Language Initiative et l'Open Mobile Alliance). L'application SIM Toolkit par exemple permet de distribuer ces droits de manière sécurisée vers un emplacement de la mémoire de la carte. Ce stockage des droits permettra par la suite au fournisseur de service à tout moment de vérifier, de modifier et de répudier si nécessaire, les droits stockés sur la carte (U)SIM sous réserve que le téléphone soit utilisé dans la zone de couverture du réseau mobile en utilisant les protocoles standardisés GSM/UMTS.

Un cas particulier de ce scénario est la modification des droits à l'initiative de l'abonné et du fournisseur de service, qui est rendue possible de manière immédiate par l'utilisation du réseau mobile. En effet, quand le fournisseur de service veut modifier les droits, il lui suffit de stocker ces nouveaux droits à la place des anciens.

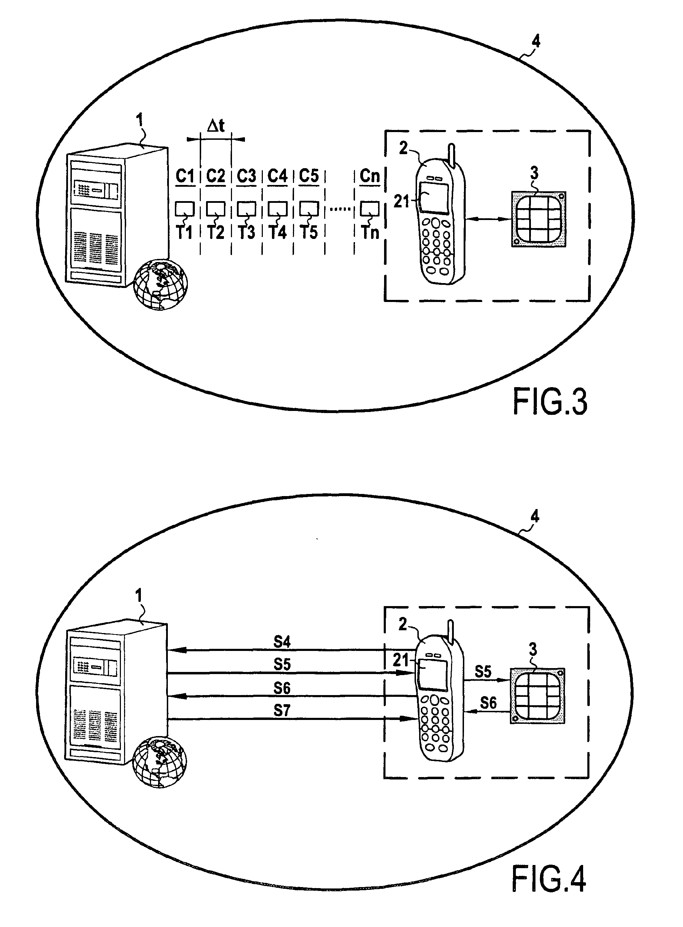

On explique maintenant en relation avec les figures 3 et 4 les étapes mises en oeuvre au redémarrage de la transmission du programme télévisuel conformément à la présente invention.

Comme illustré sur la figure 3, après acquisition des droits d'utilisation par la carte (U)SIM 3 comme décrit ci-dessus, le serveur 1 transmet au téléphone 2 un programme audiovisuel sous forme chiffrée ou cryptée via le réseau de communication mobile 4. Suivant la technique de transmission utilisée pour transmettre des données sur les réseaux de téléphonie mobile (ex. UMTS (3G)), le programme audiovisuel est diffusé suivant une succession de trames T1 à Tn, chaque trame définissant un intervalle de temps Δt dans lequel une partie des données du programme audiovisuel sont transmises au téléphone 2. Par conséquent, chaque trame, de par son emplacement dans la chaîne de transmission et l'intervalle de temps qu'elle représente, correspond à un moment particulier (ou à une plage de temps) du programme audiovisuel transmis. Selon un premier aspect de l'invention, la carte (U)SIM peut mémoriser les numéros de trames reçus de manière à pouvoir indiquer le dernier numéro de trame reçus lors d'une interruption. Selon un autre aspect de la présente invention, chaque trame peut être chiffrée avec une clef de chiffrement propre, ce qui permet d'identifier chaque trame T1 à Tn avec une clef de chiffrement distincte, respectivement C1 à Cn sur la figure 3. La carte (U)SIM 3 qui a reçu les droits pour déchiffrer le programme transmis au téléphone génère une suite de clef de déchiffrement similaire à la suite de clefs de chiffrement C1 à Cn. La carte (U)SIM 3 est donc en mesure d'indiquer à tout moment de la transmission la clef de chiffrement/déchiffrement utilisée à cet instant.

Ainsi, lors d'une interruption de diffusion du programme, le téléphone mobile 2 demande le redémarrage de la transmission du programme qui a été précédemment interrompu (étape S4, figure 4). Le serveur 1 demande alors à la carte (U)SIM 3 à quel moment la transmission du programme avait été interrompu (étape S5). La carte (U)SIM va alors répondre au serveur en lui donnant une référence de la dernière trame reçus ou de la clef utilisée lors du chiffrement de la dernière trame reçue permettant de savoir quand a eu lieu l'interruption (étape S6). Le serveur met à jour si nécessaire les droits stockés sur la carte (U)SIM afin de reprendre la transmission du programme là où il avait été interrompu (étape S7)).

On décrit maintenant des exemples de gestion des références des clefs utilisées dans le chiffrement du contenu diffusé.

Il est possible de générer ces clefs de différentes manières. Une solution particulièrement sécurisée consiste à utiliser un secret commun (ex. code PIN) au fournisseur de service et à la carte de l'utilisateur (suivant les solutions employées ce secret pourrait être personnalisé ou non en utilisant un algorithme de diversification de clef). Ce secret est entré dans la carte soit à la personnalisation de la carte, soit par téléchargement sécurisé au moment se la souscription de l'abonnement auprès du fournisseur de services.

Ce secret commun va ensuite être utilisé pour calculer, à partir de la première clef de déchiffrement contenue dans les droits associés au contenu numérique, une suite de clefs de chiffrement/déchiffrement utilisées pour chiffrer/déchiffrer les trames successives du contenu à la fois du coté serveur pour le chiffrement et du coté de la carte pour le déchiffrement.

Pour calculer cette suite, on peut utiliser une fonction cryptographique qui peut être, par exemple, un autre algorithme de chiffrement tel que AES ("Advanced Encryption Standard") ou tout autre algorithme adapté à la longueur de cette clef de déchiffrement (classiquement 128 bits). On applique itérativement cet algorithme à la clef précédente utilisée et au secret pour obtenir la clef suivante à utiliser. Cette procédure se fait en parallèle du déchiffrement utilisant la clef "INPUT" de la fonction cryptographique.

Le secret peut naturellement être renouvelé à l'initiative du fournisseur de service en fonction de ses besoins en utilisant le téléchargement de clef sécurisé permis par le GSM.

L'algorithme peut également être renouvelé s'il a été cassé par la communauté scientifique ce qui laisse une complète flexibilité au fournisseur de services pour son architecture de sécurité. En outre, plusieurs algorithmes peuvent être présents dans la carte pour passer de l'un à l'autre si nécessaire.

Les mêmes calculs sont donc itérés à la fois au niveau du serveur de diffusion et de la carte ce qui permet d'avoir la même suite de clefs dans les deux entités et de générer, par conséquent, une suite de références qui peut être soit le numéro de la trame ou la valeur (chiffrée sous une autre clef) de la clef utilisée pour cette trame.

II suffit donc à la carte de stocker dynamiquement cette référence et de la renvoyer au serveur lorsque celui-ci la requiert pour rétablir le visionnage à la suite d'une interruption. Les méthodes détaillées pour redémarrer le visionnage à l'aide de cette référence varient selon qu'il s'agisse d'une transmission point à point ou d'une diffusion point-multipoint. Ces méthodes sont bien connues en elles-mêmes et ne seront pas décrites plus en détail par soucis de simplification.

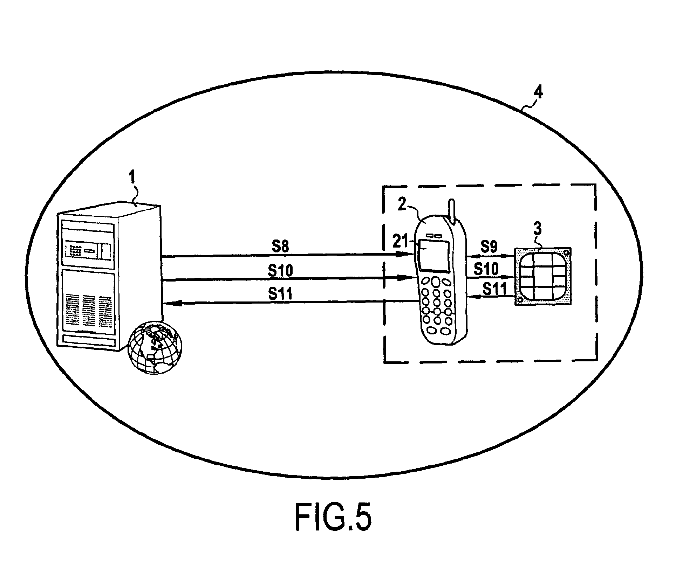

La figure 5 illustre les étapes mises en oeuvre lors de la vérification des droits.

Le téléphone mobile 2 est sous couverture du réseau de téléphonie mobile 4 et est en train (ou non) de lire (i.e. de déchiffrer) un contenu audiovisuel transmis par le fournisseur de service (étapes S8 et S9). Le serveur 1 envoie une commande pour vérifier la validité des droits (stockés sur la carte (U)SIM 3 de l'utilisateur) possédés par l'utilisateur (étape S10). La carte (U)SIM 3 va alors répondre au serveur en indiquant quels droits sont possédés par l'utilisateur. La forme de la réponse de la carte (U)SIM au serveur dépend du protocole utilisé. Par exemple, la carte (U)SIM peut répondre au serveur en lui envoyant un SMS chiffré correspondant aux droits de l'utilisateur (norme 3GPP 23.048). Les droits d'utilisation octroyés à l'utilisateur peuvent être très variés. D'une manière générale, ils correspondent à des contraintes ou limitations d'utilisation des contenus multimédias. Ces contraintes ou limitations seront interprétés par un agent DRM (logiciel effectuant des opérations spécifiques de gestion numérique des droits) et appliquées aux contenus multimédias concernés. A titre d'exemple les droits d'utilisation peuvent concerner:
- la date limite d'utilisation du contenu;
- nombre de fois que le contenu peut être utilisé;
- l'identité à laquelle le contenu peut être associé;
- les conditions d'utilisation particulières (ex. l'utilisateur doit être obligatoirement sous couverture du réseau mobile pour pouvoir utiliser le contenu).

Les droits d'utilisation peuvent être exprimés dans différents langages suivant la technologie de gestion de ces droits employée. Par exemple, les droits d'utilisation peuvent être écrits en langage ODRL (pour "Open Digital Rights Langage") utilisé dans la norme OMA (pour "Open Mobile Alliance") ou en langage XrML (pour "eXtensible Rights Markup Language") utilisé par la plate-forme Windows Media® DRM.

La réponse de la carte (U)SIM concernant les droits d'utilisation possédés par l'utilisateur est ensuite transmise grâce au réseau mobile vers le fournisseur de service (étape S11) puisqu'il existe une communication bidirectionnelle dans un réseau mobile. Ainsi, le serveur pourra vérifier la validité des droits en les comparant aux droits que l'utilisateur aura effectivement acquis au préalable et qui sont stockés dans la base de données utilisateur. En cas de différence, il peut faire une recherche expliquant cette différence (par exemple un délai de synchronisation des bases de données suite à une transaction récente). Lors de la détection d'une tentative de fraude de l'utilisateur, le fournisseur pourrait prendre immédiatement les mesures adéquates, comme par exemple la destruction de tout droit contenu dans la carte, ou la facturation de l'accès aux programmes rajoutés illicitement sur la carte. La méthode utilisée pour la destruction des droits est analogue à celle utilisée pour le stockage ou modification des droits dans la carte, déjà détaillée (cf. figure 1).

## Revendications

1. Procédé de gestion de transmission de contenus multimédias sur un terminal mobile (2) équipé d'un module de sécurité (3), lesdits contenus multimédias étant transmis sous forme chiffrée à partir d'un serveur de diffusion (1) et via un réseau de communication (4), ledit procédé comprenant les étapes suivantes:
a) envoi au terminal mobile (2) de données de droits d'utilisation pour au moins un contenu multimédia,
b) stockage desdites données de droits d'utilisation dans le module de sécurité (3) du terminal mobile (2),
c) génération d'une suite de clés de chiffrement/déchiffrement, la suite de clés de déchiffrement étant générée à partir des données de droits d'utilisation stockées dans le module de sécurité (3),
d) transmission du contenu multimédia au terminal mobile (2), ledit contenu étant chiffré successivement avec les clés de la suite de clés de chiffrement générée,
e) réception du contenu multimédia par le terminal mobile et déchiffrement du contenu multimédia à partir des clés de déchiffrement de la suite de clés de déchiffrement générée dans le module de sécurité du terminal mobile ;
**caractérisé en ce que** le serveur de diffusion (1) chiffre chaque trame du contenu multimédia avec une clé de chiffrement distincte de la suite de clés de chiffrement, le module de sécurité du terminal mobile générant une suite de clés de chiffrement similaire,
et **en ce que** lors d'une interruption de la transmission du contenu multimédia, ledit procédé comprend en outre une étape f) d'envoi par le terminal mobile au serveur de diffusion de données de référence de la clé de chiffrement utilisée au moment de l'interruption et une étape g) de reprise de la diffusion du contenu multimédia en fonction de ladite clé de chiffrement envoyée à l'étape f).

2. Procédé selon la revendication 1, **caractérisé en ce que,** dans l'étape c), chaque clé de chiffrement/déchiffrement est générée pendant une durée correspondant à l'intervalle de temps défini par chaque trame envoyées par le serveur de diffusion (1).

3. Procédé selon la revendication 1 ou 2, **caractérisé en ce qu'**il comprend en outre une étape h) de vérification de la validité des droits d'utilisation sur le terminal mobile (2), la vérification étant réalisée par interrogation des données de droits d'utilisation enregistrées dans le module de sécurité et par comparaison de celles-ci avec des données de droits d'utilisation stockées dans une base de données.

4. Procédé selon l'une quelconque des revendications 1 à 3, **caractérisé en ce que** dans l'étape c), les clés de la suite de clés de déchiffrement sont calculées itérativement à partir d'une clé de base et d'un code secret, ledit code secret étant préalablement défini et échangé entre le terminal mobile (2) et le serveur de diffusion (1).

5. Module de sécurité (3) destiné à être embarqué dans un terminal mobile (2), ledit terminal de communication étant utilisé pour recevoir des contenus multimédias transmis sous forme chiffrée par une suite de clés de chiffrement, ledit module comprenant des moyens pour mémoriser des données de droits d'utilisation pour au moins un contenu multimédia et des moyens pour calculer et stocker une suite de clés de déchiffrement à partir des données de droits d'utilisation enregistrées, **caractérisé en ce que** chaque trame d'un contenu multimédia est chiffrée avec une clé de chiffrement distincte de la suite de clés de chiffrement et **en ce que** ledit module comprend des moyens pour générer une suite de clés de chiffrement similaire à la suite de clés de chiffrement utilisée pour chiffrer le contenu multimédia et des moyens pour envoyer des données de référence de la clé de chiffrement utilisée au moment d'une interruption de la transmission d'un contenu multimédia au terminal mobile.

6. Terminal mobile (2) comprenant au moins des moyens d'affichage, **caractérisé en ce qu'**il comprend un module de sécurité selon la revendication 5.

7. Programme d'ordinateur destiné à être mis en oeuvre sur un terminal mobile (2) selon la revendication 6, comportant des instructions pour générer une suite de clés de chiffrement/déchiffrement, la suite de clés de déchiffrement étant générée à partir de données de droits d'utilisation reçues par le terminal mobile et pour déchiffrer, à partir des clés de déchiffrement de la suite de clés de déchiffrement générée, un contenu multimédia reçu par le terminal mobile, **caractérisé en ce que** chaque trame du contenu multimédia est chiffrée avec une clé de chiffrement distincte d'une suite de clés de chiffrement et **en ce que** ledit programme comporte des instructions pour générer une suite de clés de chiffrement similaire à la suite de clés de chiffrement utilisée pour chiffrer le contenu multimédia et des instructions pour envoyer des données de référence de la clé de chiffrement utilisée au moment d'une interruption de la transmission du contenu multimédia au terminal mobile.

8. Serveur de diffusion comprenant des moyens pour transmettre via un réseau de communication (4) des contenus multimédias sous forme chiffrée à un terminal mobile (2) équipé d'un module de sécurité (3), ledit serveur comprenant des moyens pour transmettre au terminal mobile des données de droits d'utilisation sur les contenus multimédias transmis comprenant des données pour calculer une suite de clés de déchiffrement similaire à une suite de clés de chiffrement calculée par ledit serveur, **caractérisé en ce qu'**il comprend en outre des moyens pour chiffrer chaque trame d'un contenu multimédia avec une clé de chiffrement distincte de la suite de clés de chiffrement et des moyens pour, lors d'une interruption de diffusion d'un contenu multimédia, interroger le module de sécurité (3) du terminal mobile (2) sur la dernière clé de chiffrement utilisée au moment de l'interruption.

9. Serveur selon la revendication 8, **caractérisé en ce qu'**il comprend une base de données pour stocker les données de droits d'utilisation transmis au terminal mobile, des moyens pour interroger les données de droits d'utilisation enregistrées sur le module de sécurité du terminal mobile et pour les comparer avec les données de droits d'utilisation stockées dans la base de données.

10. Programme d'ordinateur destiné à être mis en oeuvre sur un serveur selon la revendication 8 ou 9, comportant des instructions pour générer une suite de clés de chiffrement/déchiffrement, des instructions pour transmettre à un terminal mobile des données de droits d'utilisation sur au moins un contenu multimédia comprenant des données pour calculer une suite de clés de déchiffrement similaire à la suite de clés de chiffrement calculée par ledit serveur et des instructions pour transmettre le contenu multimédia au terminal mobile, **caractérisé en ce qu'**il comporte en outre des instructions pour chiffrer chaque trame du contenu multimédia avec une clé de chiffrement distincte de la suite de clés de chiffrement générées et des instructions pour, lors d'une interruption de diffusion du contenu multimédia, interroger le module de sécurité (3) du terminal mobile (2) sur la dernière clé de chiffrement utilisée au moment de l'interruption.

11. Système de gestion de transmission de contenus multimédias **caractérisé en ce qu'**il comprend un terminal mobile (2) selon la revendication 6, ledit terminal étant équipé d'un module de sécurité (3) selon la revendication 5, et un serveur de diffusion selon la revendication 8 ou 9.

## Claims

1. Method of managing the transmission of multimedia contents on a mobile terminal (2) equipped with a security module (3), said multimedia contents being transmitted in encrypted form from a broadcasting server (1) and via a communication network (4), said method comprising the following steps:
a) dispatching to the mobile terminal (2) of rights-of-use data for at least one multimedia content,
b) storage of said rights-of-use data in the security module (3) of the mobile terminal (2),
c) generation of a series of encryption/decryption keys, the series of decryption keys being generated on the basis of the rights-of-use data stored in the security module (3),
d) transmission of the multimedia content to the mobile terminal (2), said content being encrypted successively with the keys of the series of encryption keys generated,
e) reception of the multimedia content by the mobile terminal and decryption of the multimedia content on the basis of the decryption keys of the series of decryption keys generated in the security module of the mobile terminal;
**characterized in that** the broadcasting server (1) encrypts each frame of the multimedia content with a distinct encryption key of the series of encryption keys, the security module of the mobile terminal generating a similar series of encryption keys,
and **in that** during an interruption in the transmission of the multimedia content, said method furthermore comprises a step f) of dispatching by the mobile terminal to the broadcasting server of reference data of the encryption key used at the moment of the interruption and a step g) of resuming the broadcasting of the multimedia content as a function of said encryption key dispatched in step f).

2. Method according to Claim 1, **characterized in that,** in step c), each encryption/decryption key is generated for a duration corresponding to the time interval defined by each frame dispatched by the broadcasting server (1).

3. Method according to Claim 1 or 2, **characterized in that** it furthermore comprises a step h) of verifying the validity of the rights of use on the mobile terminal (2), the verification being carried out by interrogating the rights-of-use data recorded in the security module and by comparing them with rights-of-use data stored in a database.

4. Method according to any one of Claims 1 to 3, **characterized in that** in step c), the keys of the series of decryption keys are calculated iteratively on the basis of a base key and of a secret code, said secret code being previously defined and exchanged between the mobile terminal (2) and the broadcasting server (1).

5. Security module (3) intended to be embedded in a mobile terminal (2), said communication terminal being used to receive multimedia contents transmitted in a form encrypted by a series of encryption keys, said module comprising means for storing rights-of-use data for at least one multimedia content and means for calculating and storing a series of decryption keys on the basis of the rights-of-use data recorded, **characterized in that** each frame of a multimedia content is encrypted with a distinct encryption key of the series of encryption keys, and **in that** said module comprises means for generating a similar series of encryption keys to the series of encryption keys used to encrypt the multimedia content and means for dispatching reference data of the encryption key used at the moment of an interruption in the transmission of a multimedia content to the mobile terminal.

6. Mobile terminal (2) comprising at least display means, **characterized in that** it comprises a security module according to Claim 5.

7. Computer program intended to be implemented on a mobile terminal (2) according to Claim 6, comprising instructions for generating a series of encryption/decryption keys, the series of decryption keys being generated on the basis of rights-of-use data received by the mobile terminal and for decrypting, on the basis of the decryption keys of the series of decryption keys generated, a multimedia content received by the mobile terminal, **characterized in that** each frame of the multimedia content is encrypted with a distinct encryption key of a series of encryption keys and **in that** said program comprises instructions for generating a series of encryption keys similar to the series of encryption keys used to encrypt the multimedia content and instructions for dispatching reference data of the encryption key used at the moment of an interruption in the transmission of the multimedia content to the mobile terminal.

8. Broadcasting server comprising means for transmitting via a communication network (4) multimedia contents in encrypted form to a mobile terminal (2) equipped with a security module (3), said server comprising means for transmitting to the mobile terminal rights-of-use data on the multimedia contents transmitted comprising data for calculating a series of decryption keys similar to a series of encryption keys calculated by said server, **characterized in that** it furthermore comprises means for encrypting each frame of a multimedia content with a distinct encryption key of the series of encryption keys and means for, during an interruption in broadcasting of a multimedia content, interrogating the security module (3) of the mobile terminal (2) on the last encryption key used at the moment of the interruption.

9. Server according to Claim 8, **characterized in that** it comprises a database for storing the rights-of-use data transmitted to the mobile terminal, means for interrogating the rights-of-use data recorded on the security module of the mobile terminal and for comparing them with the rights-of-use data stored in the database.

10. Computer program intended to be implemented on a server according to Claim 8 or 9, comprising instructions for generating a series of encryption/decryption keys, instructions for transmitting to a mobile terminal rights-of-use data on at least one multimedia content comprising data for calculating a series of decryption keys similar to the series of encryption keys calculated by said server and instructions for transmitting the multimedia content to the mobile terminal, **characterized in that** it furthermore comprises instructions for encrypting each frame of the multimedia content with a distinct encryption key of the series of encryption keys generated and instructions for, during an interruption in broadcasting of the multimedia content, interrogating the security module (3) of the mobile terminal (2) on the last encryption key used at the moment of the interruption.

11. System for managing the transmission of multimedia contents, **characterized in that** it comprises a mobile terminal (2) according to Claim 6, said terminal being equipped with a security module (3) according to Claim 5, and a broadcasting server according to Claim 8 or 9.

## Patentansprüche

1. Verfahren zur Verwaltung der Übertragung von Multimedia-Inhalten an ein mit einem Sicherheitsmodul (3) ausgestattetes mobiles Endgerät (2), wobei die Multimedia-Inhalte ausgehend von einem Verbreitungsserver (1) und über ein Kommunikationsnetz (4) in verschlüsselter Form übertragen werden, wobei das Verfahren die folgenden Schritte aufweist:
a) Senden von Benutzungsrechtdaten für mindestens einen Multimedia-Inhalt an das mobile Endgerät (2),
b) Speichern der Benutzungsrechtdaten im Sicherheitsmodul (3) des mobilen Endgeräts (2),
c) Erzeugen einer Folge von Verschlüsselungs-/Entschlüsselungsschlüsseln, wobei die Folge von Entschlüsselungsschlüsseln ausgehend von den im Sicherheitsmodul (3) gespeicherten Benutzungsrechtdaten generiert wird,
d) Übertragen des Multimedia-Inhalts an das mobile Endgerät (2), wobei der Inhalt nacheinander mit den Schlüsseln der generierten Folge von Verschlüsselungsschlüsseln verschlüsselt wird,
e) Empfangen des Multimedia-Inhalts durch das mobile Endgerät und Entschlüsseln des Multimedia-Inhalts ausgehend von den Entschlüsselungsschlüsseln der im Sicherheitsmodul des mobilen Endgeräts generierten Folge von Entschlüsselungsschlüsseln;
**dadurch gekennzeichnet, dass** der Verbreitungsserver (1) jeden Rahmen des Multimedia-Inhalts mit einem individuellen Verschlüsselungsschlüssel der Folge von Verschlüsselungsschlüsseln verschlüsselt, wobei das Sicherheitsmodul des mobilen Endgeräts eine gleichartige Folge von Verschlüsselungsschlüsseln generiert,
und dass bei einer Unterbrechung der Übertragung des Multimedia-Inhalts das Verfahren außerdem einen Schritt f) des Sendens von Referenzdaten des im Moment der Unterbrechung verwendeten Verschlüsselungsschlüssels vom mobilen Endgerät an den Verbreitungsserver und einen Schritt g) der Wiederaufnahme der Verbreitung des Multimedia-Inhalts in Abhängigkeit von dem im Schritt f) gesendeten Verschlüsselungsschlüssel aufweist.

2. Verfahren nach Anspruch 1, **dadurch gekennzeichnet, dass** im Schritt c) jeder Verschlüsselungs-/Entschlüsselungsschlüssel während einer Dauer generiert wird, die dem Zeitintervall entspricht, das durch jeden vom Verbreitungsserver (1) gesendeten Rahmen definiert wird.

3. Verfahren nach Anspruch 1 oder 2, **dadurch gekennzeichnet, dass** es außerdem einen Schritt h) der Überprüfung der Gültigkeit der Benutzungsrechte des mobilen Endgeräts (2) aufweist, 1 wobei die Überprüfung durch Abfrage der im Sicherheitsmodul gespeicherten Benutzungsrechtdaten und durch deren Vergleich mit in einer Datenbank gespeicherten Benutzungsrechtdaten durchgeführt wird.

4. Verfahren nach einem der Ansprüche 1 bis 3, **dadurch gekennzeichnet, dass** im Schritt c) die Schlüssel der Folge von Entschlüsselungsschlüsseln iterativ ausgehend von einem Basisschlüssel und von einem Geheimcode berechnet werden, wobei der Geheimcode vorher definiert und zwischen dem mobilen Endgerät (2) und dem Verbreitungsserver (1) ausgetauscht wird.

5. Sicherheitsmodul (3), das dazu bestimmt ist, in ein mobiles Endgerät (2) eingebaut zu werden, wobei das Kommunikationsendgerät verwendet wird, um Multimedia-Inhalte zu empfangen, die in durch eine Folge von Verschlüsselungsschlüsseln verschlüsselter Form übertragen werden, wobei das Modul Einrichtungen, um Benutzungsrechtdaten für mindestens einen Multimedia-Inhalt zu speichern, und Einrichtungen aufweist, um eine Folge von Entschlüsselungsschlüsseln ausgehend von den gespeicherten Benutzungsrechtdaten zu berechnen und zu speichern, **dadurch gekennzeichnet, dass** jeder Rahmen eines Multimedia-Inhalts mit einem individuellen Verschlüsselungsschlüssel der Folge von Verschlüsselungsschlüsseln verschlüsselt wird, und dass das Modul Einrichtungen, um eine Folge von Verschlüsselungsschlüsseln gleich der Folge von Verschlüsselungsschlüsseln zu generieren, die verwendet wird, um den Multimedia-Inhalt zu verschlüsseln, und Einrichtungen aufweist, um Referenzdaten des im Moment einer Unterbrechung der Übertragung eines Multimedia-Inhalts verwendeten Verschlüsselungsschlüssels an das mobile Endgerät zu senden.

6. Mobiles Endgerät (2), das mindestens Anzeigeeinrichtungen aufweist, **dadurch gekennzeichnet, dass** es ein Sicherheitsmodul nach Anspruch 5 enthält.

7. Computerprogramm, das dazu bestimmt ist, in einem mobilen Endgerät (2) nach Anspruch 6 ausgeführt zu werden, das Anweisungen enthält, um eine Folge von Verschlüsselungs-/Entschlüsselungsschlüsseln zu generieren, wobei die Folge von Entschlüsselungsschlüsseln ausgehend von vom mobilen Endgerät empfangenen Benutzungsrechtdaten generiert wird, und um ausgehend von den Entschlüsselungsschlüsseln der generierten Folge von Entschlüsselungsschlüsseln einen vom mobilen Endgerät empfangenen Multimedia-Inhalt zu entschlüsseln, **dadurch gekennzeichnet, dass** jeder Rahmen des Multimedia-Inhalts mit einem individuellen Verschlüsselungsschlüssel einer Folge von Verschlüsselungsschlüsseln verschlüsselt wird, und dass das Programm Anweisungen, um eine Folge von Verschlüsselungsschlüsseln gleich der Folge von Verschlüsselungsschlüsseln zu generieren, die verwendet wird, um den Multimedia-Inhalt zu verschlüsseln, und Anweisungen enthält, um Referenzdaten des im Moment einer Unterbrechung der Übertragung des Multimedia-Inhalts verwendeten Verschlüsselungsschlüssels an das mobile Endgerät zu senden.

8. Verbreitungsserver, der Einrichtungen aufweist, um über ein Kommunikationsnetz (4) Multimedia-Inhalte in verschlüsselter Form an ein mit einem Sicherheitsmodul (3) ausgestattetes mobiles Endgerät (2) zu übertragen, wobei der Server Einrichtungen aufweist, um Benutzungsrechtdaten an den übertragenen Multimedia-Inhalten an das mobile Endgerät zu übertragen, die Daten enthalten, um eine Folge von Entschlüsselungsschlüsseln gleich einer vom Server berechneten Folge von Verschlüsselungsschlüsseln zu berechnen, **dadurch gekennzeichnet, dass** er außerdem Einrichtungen, um jeden Rahmen eines Multimedia-Inhalts mit einem unterschiedlichen Verschlüsselungsschlüssel der Folge von Verschlüsselungsschlüsseln zu verschlüsseln, und Einrichtungen aufweist, um bei einer Unterbrechung der Verbreitung eines Multimedia-Inhalts das Sicherheitsmodul (3) des mobilen Endgeräts (2) über den letzten im Moment der Unterbrechung verwendeten Verschlüsselungsschlüssel abzufragen.

9. Server nach Anspruch 8, **dadurch gekennzeichnet, dass** er eine Datenbank, um die an das mobile Endgerät übertragenen Benutzungsrechtdaten zu speichern, und Einrichtungen aufweist, um die im Sicherheitsmodul des mobilen Endgeräts gespeicherten Benutzungsrechtdaten abzufragen und um sie mit den in der Datenbank gespeicherten Benutzungsrechtdaten zu vergleichen.

10. Computerprogramm, das dazu bestimmt ist, in einem Server nach Anspruch 8 oder 9 ausgeführt zu werden, das Anweisungen, um eine Folge von Verschlüsselungs-/Entschlüsselungsschlüsseln zu generieren, Anweisungen, um Benutzungsrechtdaten an mindestens einem Multimedia-Inhalt, die Daten enthalten, um eine Folge von Entschlüsselungsschlüsseln gleich der Folge von vom Server berechneten Verschlüsselungsschlüsseln zu berechnen, an ein mobiles Endgerät zu übertragen, und Anweisungen enthält, um den Multimedia-Inhalt an das mobile Endgerät zu übertragen, **dadurch gekennzeichnet, dass** es außerdem Anweisungen, um jeden Rahmen des Multimedia-Inhalts mit einem individuellen Verschlüsselungsschlüssel der Folge von generierten Verschlüsselungsschlüsseln zu verschlüsseln, und Anweisungen enthält, um bei einer Unterbrechung der Verbreitung des Multimedia-Inhalts das Sicherheitsmodul (3) des mobilen Endgeräts (2) über den letzten Verschlüsselungsschlüssel abzufragen, der im Moment der Unterbrechung verwendet wurde.

11. System zur Verwaltung der Übertragung von Multimedia-Inhalten, **dadurch gekennzeichnet, dass** es ein mobiles Endgerät (2) nach Anspruch 6 aufweist, wobei das Endgerät mit einem Sicherheitsmodul (3) nach Anspruch 5 und mit einem Verbreitungsserver nach Anspruch 8 oder 9 ausgestattet ist.
